# EUROPÄISCHE PATENTSCHRIFT

(11) **EP 3 355 436 B1**
(45) Veröffentlichungstag und Bekanntmachung des Hinweises auf die Patenterteilung: **04.11.2020**
(21) Anmeldenummer: 18152548.6
(22) Anmeldetag: 19.01.2018
(51) Int. Cl.: H02J 7/00, H02G 3/12

(54) **ELEKTRISCHES UNTERPUTZ-INSTALLATIONSGERÄT MIT LADEFUNKTION FÜR EIN MOBILES AUDIO- UND KOMMUNIKATIONSGERÄT**
ELECTRICAL BUILT-IN INSTALLATION DEVICE WITH CHARGER FOR A MOBILE AUDIO AND COMMUNICATION DEVICE
APPAREIL D'INSTALLATION ENCASTRÉ ÉLECTRIQUE DOTÉ D'UNE FONCTION DE CHARGE POUR UN APPAREIL DE COMMUNICATION AUDIO MOBILE

(30) Priorität: 25.01.2017 DE 102017101382
(43) Veröffentlichungstag der Anmeldung: 01.08.2018
(73) Patentinhaber: ABB Schweiz AG, 5400 Baden (CH)
(72) Erfinder: Mrkajic, Oliver, 58507 Lüdenscheid (DE); Lange, Manfred, 44229 Dortmund (DE); Thinius, Dörte, 42349 Wuppertal (DE)
(74) Vertreter: Marks, Frank

(56) Entgegenhaltungen:
- EP-A2- 1 998 423
- EP-A2- 2 256 896
- EP-A2- 2 523 282
- DE-A1-102009 017 265
- DE-A1-102010 005 393
- US-A- 4 335 863
- US-A1- 2005 109 528

## Beschreibung

Die Erfindung betrifft ein elektrisches Unterputz-Installationsgerät mit Ladefunktion für ein mobiles Audio- und Kommunikationsgeräte.

Schalterprogramme bzw. Programme von Installationsgeräten werden oftmals mit Ladefunktionen für mobile Geräte ergänzt. Hier sind zahlreiche marktübliche Anwendungen bekannt, die das Laden der mobilen Geräte im Design des Schalter- und Steckdosenprogramms ermöglichen und so die Belegung einer Steckdose mit einem zusätzlichen Netzteil zum Laden des mobilen Gerätes vermeiden.

Beispielsweise beschreibt die DE 10 2010 005 393 A1 ein Unterputz- Installationsgerät, welches ein Ladegerät für ein mobiles Audiogerät sowie einen elektrischen 230V- Anschluss in dem Unterputz-Einsatz aufweist. Das Unterputz-Instailationsgerät ist weiterhin mit einem Halter, mit einer Zentralscheibe für die Aufnahme des mobilen Audiogerätes sowie einem Abdeckrahmen und einer Leiterplatte, welche mittels mehrerer Steckvorrichtungen die elektrische Verbindung zwischen dem mobilen Audiogerät und dem Unterputz-Einsatz sicherstellt, ausgestattet.

Aus der US 2005/109528 A1 ist ein Elektroanschlusskasten bekannt, dessen Abdeckplatte eine Aufnahme für ein elektronisches Gerät aufweist, die mit flexiblen und bestimmte Formgedächtnisretentionseigenschaften aufweisenden Polsterelemente ausgestattet ist.

Die DE 102009017265 A1 beschreibt ein elektrisches Unterputz- Installationsgerät mit Ladefunktion für ein Mobilgerät mit einer federnd gelagerte Klappe mit einem Scharniergelenk.

Bei elektrischen Unterputz-Installationsgeräten eines Schalter- und Steckdosprogrammes zur Aufnahme und zum Laden der mobilen Audio- und Kommunikationsgerätes besteht prinzipiell das Problem, dass ein Herausfallen der Geräte aus der Aufnahme bzw. Ladeschale nicht auszuschließen ist.

Um dies zu vermeiden und die mobilen Audio- und Kommunikationsgeräte vor Beschädigungen zu schützen, sind die Ladeschalen bzw. Aufnahmen für das mobile Gerät oft so konstruiert, dass die mobilen Geräte bei ihrem Einlegen in die Schale eine leichte Rücklagen einnehmen und so im Fall eines in der Wand installierten Installationsgerätes während dem Ladevorgang der Wand zugeneigt sind.

Dies hat den Nachteil, dass die teilweise sehr hochwertigen Oberflächen der mobilen Geräte mit der Oberfläche der Wand in Berührung kommen und je nach Beschaffenheit der Wandoberfläche die Oberfläche des mobilen Gerätes oder die rückseitig angeordnete Kamera verkratzt oder beschädigt werden. Hat beispielsweise die Wandoberfläche eine sehr harte und raue Struktur, wie bei einem Quarz- oder Mineralputz, kann die anliegende Hochglanzoberfläche oder die anliegende Linse einer rückseitig angeordneten Kamera des mobilen Kommunikationsgerätes Schaden nehmen.

Der Erfindung liegt die Aufgabe zugrunde, den Aufbau des Installationsgerätes so zu optimieren, dass eine Beschädigung des mobilen Audio- und Kommunikationsgerätes, insbesondere während des Ladevorganges, bei dessen Ablage auf der Ladeschale bzw. Aufnahme vermieden wird.

Diese Aufgabe wird erfindungsgemäß gelöst durch ein elektrisches Unterputz-Installationsgerät zur Aufnahme eines mobilen Audio- und Kommunikationsgerätes
- mit einem ein Ladegerät und einen elektrischen Anschluss bis 250V beinhaltenden UP-Einsatz,
- mit einem Abdeckrahmen,
- mit einer Ladevorrichtung bzw. Ladeschale inklusive einer Steckvorrichtung für die Verbindung mit dem mobilen Audio- und Kommunikationsgerät zum Laden des Gerätes,
- mit einer auf die Ladeschale aufbringbaren Zentralabdeckung bzw. Zentralscheibe mit Halterung für das mobile Audio- und Kommunikationsgerät, und
- mit einer in der Abdeckung bzw. Zentralscheibe des Installationsgerätes integrierten bzw. angeformten elastischen federnden Anlagevorrichtung, welche vorzugsweise aus dem auch für die Zentralscheibe verwendeten Kunststoff gebildet ist.

Die an der Abdeckung bzw. Zentralscheibe des Installationsgerätes angeordnete Anlagevorrichtung kann entsprechend des jeweils verwendeten Installationsgeräte-Unterputz-Programm bzw. Schalter- oder Schalterprogrammes in unterschiedlichen Designs und Gestaltungsformen ausführbar sein.

Erfindungsgemäß ist die federnde, elastische Anlagefläche der Anlagevorrichtung, an welcher das mobile Gerät zur Anlage kommt, in vorteilhafter Weise einteilig in die Zentralscheibe integriert und auch gestalterisch, insbesondere in Bezug auf Farbe, Struktur, Glanzgrad, Materialität, nicht von der Oberfläche der Zentralscheibe unterscheidbar, also an das jeweilige Schalter- oder Steckdosenprogramm des verwendeten Installationsgerätes angepasst.

Um ein unerwünschte Verformung der federnden elastische Anlagefläche weiter als vorgesehen zu vermeiden und das mobile Gerät keinen Kontakt mit der Wandoberfläche bekommt, ist hinter der Anlagefläche ein Anschlag vorgesehen, an den die Anlagefläche anschlagen kann und der Federweg so in vorteilhafter Weise begrenzt wird.

Weitere vorteilhafte und zweckmäßige Ausgestaltungen und Verbesserungen des erfindungsgemäßen elektrischen Installationsgerätes zur Aufnahme des mobilen Audio- und Kommunikationsgerätes sind in den Unteransprüchen und an Hand der in der Zeichnungen dargestellten Ausführungsbeispiele erläutert.

Es zeigen:
- **Fig. 1**: eine Explosionsdarstellung eines beispielhaft ausgeführten erfindungsgemäßen elektrischen Unterputz-Installationsgerätes zur Aufnahme eines mobilen Audio- und Kommunikationsgerätes,
- **Fig. 2**: eine perspektivische Sicht auf zwei beispielhafte elektrische Unterputz-Installationsgeräte zur Aufnahme eines mobilen Audio- und Kommunikationsgerätes,
- **Fig. 3**: eine Seitenansicht des beispielhaften elektrischen Unterputz-Installationsgerätes zur Aufnahme des mobilen Audio- und Kommunikationsgerätes gemäß vorliegender Erfindung, wobei das mobilen Audio- und Kommunikationsgerätes sich noch nicht in der Ladeschale bzw. im Aufnahmeschacht der Halterung befindet,
- **Fig. 4**: eine Seitenansicht eines weiteren beispielhaften elektrischen Unterputz-Installationsgerätes zur Aufnahme des mobilen Audio- und Kommunikationsgerätes gemäß vorliegender Erfindung, wobei sich das mobile Audio- und Kommunikationsgerät im Aufnahmeschacht Zentralabdeckung befindet, und
- **Fig. 5**: beispielhafte Zentralscheiben verschiedener Installationsgeräte-Programme zur Ablage und zum Laden von mobilen Audio- und Kommunikationsgeräte gemäß der vorliegenden Erfindung.

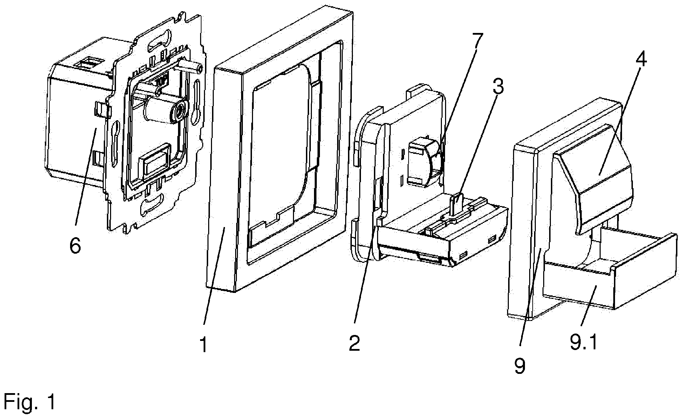

**Fig. 1** zeigt das erfindungsgemäße elektrische Unterputz-Installationsgerät zur Aufnahme eines mobilen Audio- und Kommunikationsgerätes in einer Explosionsdarstellung mit einem Unterputzeinsatz 6, einem Abdeckrahmen 1, einer Ladevorrichtung bzw. Ladeschale 2 und einer auf die Ladeschale 2 aufbringbaren Zentralabdeckung 9, auch Zentralscheibe genannt, mit einem Aufnahmeschacht 9.1, nachfolgend auch Halterung genannt, für ein mobiles Audio- und Kommunikationsgerät.

Die Ladeschale 2 weist einen Anschlag 7 und eine, vorzugsweise als Steckverbinder ausgeführte Steckvorrichtung 3 für die Verbindung mit dem mobilen Audio- und Kommunikationsgerät auf, um dieses aufzuladen.

Die Zentralscheibe 9 ist in ihrer Ausführung so gestaltet, dass sie eine Designabdeckung für die Ladeschale 2 entsprechend dem jeweils verwendeten Schalter- oder Steckdosenprogramm bildet.

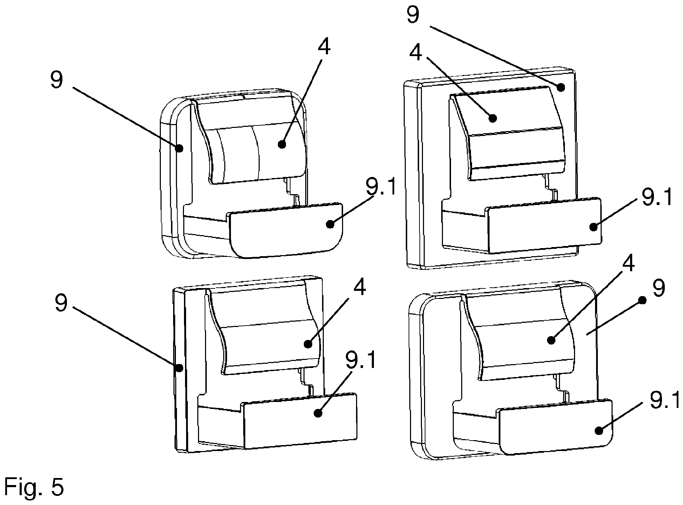

Um das zum Laden im Aufnahmeschacht der Zentralscheibe 9 abgelegte mobile Gerät vor Beschädigungen zu schützen, ist die Zentralscheibe 9 mit einer integrierten, federnde Anlagevorrichtung 4 ausgestattet, die in unterschiedlichen Designs und Gestaltungsformen ausführbar ist, welche beispielhaft in Fig. 5 gezeigt sind.

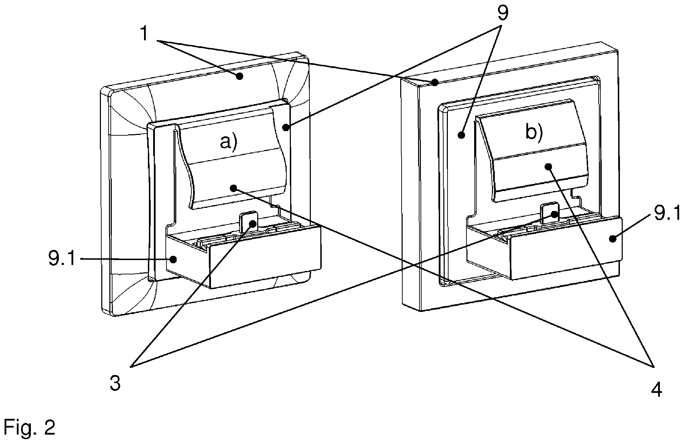

In **Fig. 2** ist eine perspektivische Sicht auf zwei beispielhafte elektrische Unterputz-Installationsgeräte zur Aufnahme eines mobilen Audio- und Kommunikationsgerätes gemäß vorliegender Erfindung gezeigt.

Dabei ist die Frontseite des elektrischen Unterputz-Installationsgerätes zu erkennen, welche von der Zentralscheibe 9 mit dem Aufnahmeschacht 9.1 für das zu ladende mobile Audio- und Kommunikationsgerät abgedeckt ist.

Im Aufnahmeschacht 9.1. ist die Steckvorrichtung 3 der Ladevorrichtung 2 für die Verbindung mit dem mobilen Audio- und Kommunikationsgerät dargestellt.

Ein Abdeckrahmen 1 umschließt die Zentralscheibe 9.

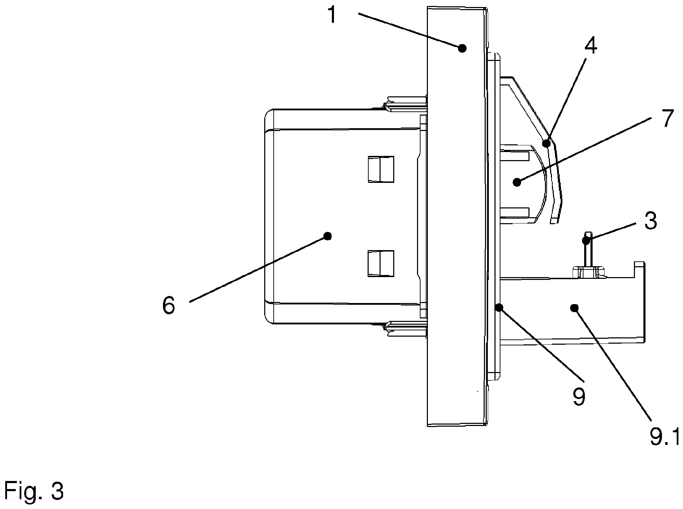

Nicht zu erkennen ist der Unterputz-Einsatz des Unterputz-Installationsgerätes, welcher in den Figuren 1 und 3 dargestellt ist. Im Unterputzeinsatz 6 sind ein elektrischer 230V- Anschluss und die Ladeelektronik der Ladevorrichtung 2 für ein energieoptimiertes Aufladen von mobilen Audio- und Kommunikationsgeräten integriert.

Um das zum Laden im Aufnahmeschacht 9.1 der Designabdeckung 9 abgelegte mobile Gerät vor Beschädigungen zu schützen, ist diese mit federnden Anlagevorrichtung 4 ausgestattet, die in unterschiedlichen Designs und Gestaltungsformen ausführbar ist.

Beispielhaft zeigt die **Fig.** 2 jeweils eine aus drei Teilen gebildete Anlagevorrichtung 4, welche gemäß einer ersten Ausführungsform a) einen wellenförmig gestalteten und gemäß einer zweiten Ausführungsform b) einen abgewinkelten Querschnitt bzw. Verlauf aufweisen.

In **Fig. 3** ist eine Seitenansicht durch ein beispielhaftes elektrisches Unterputz-Installationsgerät zur Aufnahme des mobilen Audio- und Kommunikationsgerätes gemäß vorliegender Erfindung dargestellt und zeigt die räumliche Zuordnung des vorstehend bereits erwähnten Unterputzeinsatzes 6 zur Zentralscheibe 9 inklusive der federnden Anlagevorrichtung 4 und der Steckvorrichtung 3 der Ladeschale 2.

Das Unterputz-Installationsgerät wird wiederum durch den Abdeckrahmen 1 komplettiert.

Zur Verbesserung der Anlagefunktion des im Aufnahmeschacht der Zentralscheibe 9 abgelegten mobilen Gerätes befindet sich als zusätzlicher Puffer der Anschlag 7, an dem die Anlagefläche der Anlagevorrichtung 4 anschlagen kann. Der Anschlag 7 ist, vorzugsweise im mittleren Bereich der Frontplatte der Ladeschale 2, angeordnet.

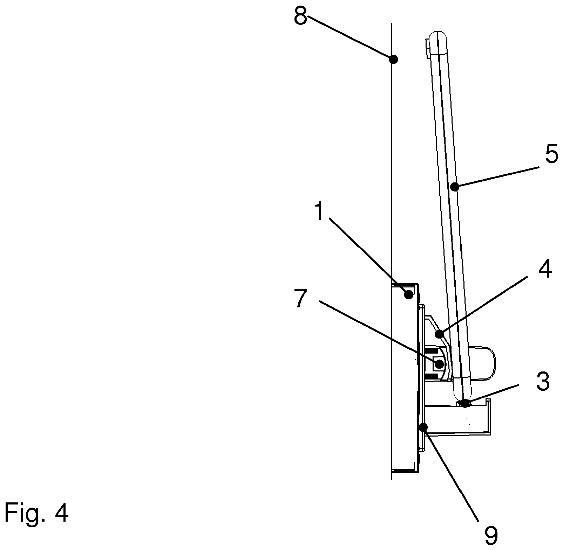

**Fig.** 4 zeigt eine Seitenansicht durch ein weiteres beispielhaftes elektrisches Unterputz-Installationsgerät zur Aufnahme des mobilen Audio- und Kommunikationsgerätes 5 gemäß vorliegender Erfindung, bei welchem das mobile Audio- und Kommunikationsgerät 5 mit der Steckverbindung 3 der Ladeschale 2 verbunden ist.

Auch hier ist der auf der Frontplatte der Ladeschale 9 befindliche Anschlag 7 zu erkennen, welcher verhindert, dass sich die Anlagefläche der elastischen Anlagevorrichtung 4 während der Ablage des mobilen Gerätes 5 weiter als vorgesehen verformt, den Federweg der Anlagevorrichtung 4 begrenzt und das mobile Gerät 5 Kontakt mit der Wandoberfläche 8 bekommt.

**Fig.** 5 zeigt Zentralscheiben 9 verschiedener Installationsgeräte-Programme zur Ablage und zum Laden von mobilen Audio- und Kommunikationsgeräte 5 gemäß der vorliegenden Erfindung. Die hier beispielhaft dargestellten Zentralscheiben 9 mit den integrierten federnd gestalteten Anlagevorrichtungen 4 ermöglichen eine formschöne Einbindung/Integration des vorgeschlagenen elektrischen Unterputz-Installationsgerätes zur Aufnahme des mobilen Audio- und Kommunikationsgerätes 5 in ein Installationsgeräte-Unterputz-Programm respektive Schalter- und Steckdosen-Unterputz-Programm sowie eine Kombination mit weiteren Geräten, beispielsweise Schaltern, Tastern, Dimmern, Steckdosen verschiedener Schalter- und Steckdosen-Unterputz-Programme.

Dazu sind Abdeckrahmen 1 und Zentralscheibe 2 gemäß den typischen Merkmalen eines speziellen Schalter- und Steckdosen-Unterputz-Programms gestaltet.

### Bezugszeichenliste

- 1: Abdeckrahmen
- 2: Ladeschale, Ladevorrichtung
- 3: Steckverbinder, Steckvorrichtung der Ladevorrichtung für die Verbindung mit dem mobilen Audio- und Kommunikationsgerät, angeordnet im Aufnahmeschacht
- 4: federnde Anlagevorrichtung
- 5: mobiles Audio- und Kommunikationsgerät
- 6: Unterputzeinsatz mit integrierter Ladefunktion
- 7: Anschlag auf der Ladeschale, Ladevorrichtung
- 8: Wandoberfläche
- 9: Zentralscheibe, Zentralabdeckung, Designabdeckung
- 9.1: Aufnahmeschacht, Halterung für ein mobiles Audio- und Kommunikationsgerät

## Patentansprüche

1. Elektrisches Unterputz-Installationsgerät zur Aufnahme eines mobilen Audio- und Kommunikationsgerätes (5),
- mit einem ein Ladegerät und einen elektrischen Anschluss bis 250V beinhaltenden Unterputz-Einsatz (6),
- mit einem Abdeckrahmen (1),
- mit einer Ladevorrichtung bzw. Ladeschale (2) inklusive einer Steckvorrichtung (3) für die Verbindung mit dem mobilen Audio- und Kommunikationsgerät zum Laden des Gerätes (5), und
- mit einer auf die Ladeschale (2) aufbringbaren Zentralabdeckung (9),
**dadurch gekennzeichnet, dass** die Zentralabdeckung (9) mit einer federnden elastische Anlagevorrichtung (4) ausgestattet ist, an der das mobile Gerät (5) zur Anlage kommt, die Anlagefläche der Anlagevorrichtung (4) einteilig in die Zentralscheibe integriert ist, wobei die Anlagevorrichtung (4) in Bezug auf die Ausgestaltung seiner Oberflächenbeschaffenheit nicht von der Oberfläche der Zentralabdeckung (9) unterscheidbar ist und an ein jeweiliges Schalter- oder Steckdosenprogramm des verwendeten Installationsgerätes angepasst ist.

2. Elektrisches Unterputz-Installationsgerät nach Anspruch 1, **dadurch gekennzeichnet, dass** hinter der federnden elastischen Anlagefläche der Anlagevorrichtung (4) ein Anschlag (7) zur Begrenzung des Federweges der Anlagefläche der Anlagevorrichtung (4) vorgesehen ist.

3. Elektrisches Unterputz-Installationsgerät nach Anspruch 2, **dadurch gekennzeichnet, dass** der Anschlag (7) im mittleren Bereich der Frontplatte der Ladeschale (2) angeordnet ist.

4. Elektrisches Unterputz-Installationsgerät nach einem der vorstehenden Ansprüche, **dadurch gekennzeichnet**, die an der Zentralabdeckung (9) des Installationsgerätes befindliche Anlagevorrichtung (4) bezüglich Material, Farbe und/oder Oberflächenstruktur entsprechend an das jeweils verwendeten Installationsgeräte-Programm bzw. Schalter- oder Steckdosenprogramm angepasst ist.

5. Elektrisches Unterputz-Installationsgerät nach einem der vorstehenden Ansprüchen, **dadurch gekennzeichnet, dass** die Zentralabdeckung (9) so ausführbar und gestaltet ist, dass sie eine Abdeckung (9) für die Ladeschale (2) entsprechend dem jeweils verwendeten Schalter- oder Steckdosenprogramm bildet.

## Claims

1. Electrical flush-mounted installation device for receiving a mobile audio and communication device (5),
- comprising a flush-mounted insert (6) which contains a charging device and an electrical connection up to 250 V,
- comprising a covering frame (1),
- comprising a charging apparatus or charging tray (2) including a plug-in apparatus (3) for connection to the mobile audio and communication device for charging the device (5), and
- comprising a central cover (9) which can be fitted onto the charging tray (2),
**characterized in that** the central cover (9) is equipped with a spring-action elastic support apparatus (4) on which the mobile device (5) comes to rest, the support surface of the support apparatus (4) being integrated into the central plate in one piece, wherein the support apparatus (4) cannot be distinguished from the surface of the central cover (9) with respect to the design of its surface condition and is matched to a respective switch or socket range of the installation device used.

2. Electrical flush-mounted installation device according to Claim 1, **characterized in that** a stop (7) for limiting the spring travel of the support surface of the support apparatus (4) is provided behind the spring-action elastic support surface of the support apparatus (4) .

3. Electrical flush-mounted installation device according to Claim 2, **characterized in that** the stop (7) is arranged in the central region of the front panel of the charging tray (2).

4. Electrical flush-mounted installation device according to one of the preceding claims, **characterized in that** the support apparatus (4) which is located on the central cover (9) of the installation device is matched in respect of material, colour and/or surface structure in a corresponding manner to the installation device range or switch or socket range respectively used.

5. Electrical flush-mounted installation device according to one of the preceding claims, **characterized in that** the central cover (9) can be designed and is configured such that it forms a cover (9) for the charging tray (2) in accordance with the switch or socket range respectively used.

## Revendications

1. Appareil d'installation électrique encastré permettant de recevoir un appareil audio et de communication mobile (5), comprenant
- un insert encastré (6) comportant un chargeur et une connexion électrique jusqu'à 250 V,
- un cache (1),
- un dispositif de chargement ou un socle de chargement (2) comprenant un dispositif de connexion (3) pour la connexion avec l'appareil audio et de communication mobile pour charger l'appareil (5), et
- un recouvrement central (9) pouvant être appliqué au socle de chargement (2),
**caractérisé en ce que** le recouvrement central (9) est équipé d'un dispositif d'appui élastique à ressort (4) sur lequel est calé l'appareil mobile (5), et **en ce que** la surface d'appui du dispositif d'appui (4) est intégrée dans le disque central d'un seul tenant, dans lequel le dispositif d'appui (4) se confond avec la surface du recouvrement (9) en ce qui concerne la configuration de la nature de sa surface et est adapté à un assortiment de fiches ou de prises de l'appareil d'installation utilisé.

2. Appareil d'installation électrique encastré selon la revendication 1, **caractérisé en ce qu'**une butée (7) pour limiter l'allongement du ressort de la surface d'appui du dispositif d'appui (4) est prévue derrière la surface d'appui élastique à ressort du dispositif d'appui (4).

3. Appareil d'installation électrique encastré selon la revendication 2, **caractérisé en ce que** la butée (7) est disposée dans la partie centrale du panneau avant du socle de chargement (2).

4. Appareil d'installation électrique encastré selon l'une quelconque des revendications précédentes, **caractérisé en ce que** le dispositif d'appui (4) qui se trouve sur le recouvrement central (9) de l'appareil d'installation est adapté en ce qui concerne le matériau, la couleur et/ou la structure de surface de manière correspondante à l'assortiment d'appareils d'installation ou à l'assortiment de fiches ou de prises utilisé respectivement.

5. Appareil d'installation électrique encastré selon l'une quelconque des revendications précédentes, **caractérisé en ce que** le recouvrement central (9) peut être réalisé et configuré de telle sorte qu'il forme un recouvrement (9) pour le socle de chargement (2) selon l'assortiment de connecteurs ou de prises utilisé respectivement.
